# EUROPEAN PATENT APPLICATION

(11) **EP 4 523 575 A1**
(43) Date of publication of application: **19.03.2025**
(21) Application number: 23803756.8
(22) Date of filing: 03.05.2023
(51) Int. Cl.: A47J 19/06, A47J 19/02, A47J 43/07

(54) **JUICER**

(30) Priority: 12.05.2022 KR 20220001170
(71) Applicant: Hurom Co., Ltd., Gimhae-si, Gyeongsangnam-do 50969 (KR)
(72) Inventor: JUNG, Sung Ha, Gimhae-si Gyeongsangnam-do 50898 (KR)
(74) Representative: dompatent von Kreisler Selting Werner - Partnerschaft von Patent- und Rechtsanwälten mbB
(86) International application number: PCT/KR2023/006059
(87) International publication number: WO 2023/219333

(57) **Abstract**

The present invention relates to a juicer, and the juicer according to the present invention comprises a cutting section which pre-cuts a material to be juiced by rotation within a hopper at an upper portion of a screw, wherein the cutting section comprises: a rotation body rotatably supported on a bottom plate of the hopper; a chopping blade disposed on one side of the rotation body and extending upward in a spiral form; a cutting blade disposed on the other side of the rotation body, extending horizontally on the bottom plate of the hopper, and pushing the material to be juiced toward the front of the rotation direction; and a transfer protrusion extending downward from a lower portion of the chopping blade and capable of transferring the material in an area between the chopping blade and the bottom plate of the hopper.

## Description

### [Technical Field]

The present invention relates to a juice extractor, and more particularly to a juice extractor capable of increasing the cutting efficiency of a cutting unit that pre-cuts a juice extraction ingredient in a hopper coupled to an upper part of a juice extraction drum such that the sufficiently pre-cut and crushed ingredient is supplied into the juice extraction drum.

### [Background Art]

More people are directly making their own green juice or juices at home for health reasons, and to this end, many devices that enable simple juice extraction of vegetables or fruits at home have been disclosed.

Conventional juice extractors produce juices by centrifugation by introducing ingredients through an inlet and crushing the ingredients using a high-speed rotating blade. In these juice extractors, however, the unique flavor and nutrients of the ingredients may be destroyed during a high-speed crushing process, it is difficult to produce green juice from stem vegetables or leaf vegetables, it is difficult to produce juices from fruits having high viscosity, such as kiwi or strawberry, and it is impossible to produce soy milk from soybeans.

In order to solve these problems, Korean Registered Patent No. 10-0793852 discloses a method of squeezing and crushing ingredients between a mesh drum and a screw rotating at a low speed, wherein soy milk is produced using the principle of grinding and squeezing soybeans with a millstone, and juices are produced by grating and squeezing fruits having high viscosity, such as tomato, kiwi, and strawberry, with a grater, whereby the problems of the conventional juice extractors are solved.

Even in this case, however, depending on the size of the screw and the size of an inlet manufactured such that ingredients of an appropriate size can be inserted through the inlet according to the size of the screw, it is necessary to pre-cut the ingredients before introducing the ingredients through the inlet, which is troublesome.

### [Disclosure]

### [Technical Problem]

The present invention has been made in view of the above problems, and it is an object of the present invention to provide a juice extractor capable of increasing the cutting efficiency of a cutting unit that pre-cuts a juice extraction ingredient in a hopper coupled to an upper part of a juice extraction drum such that the sufficiently pre-cut and crushed ingredient is supplied into the juice extraction drum.

Objects of the present invention are not limited to the aforementioned object, and other unmentioned objects of the present invention will be clearly understood by those skilled in the art from the following description.

### [Technical Solution]

The above object of the present invention may be accomplished by a juice extractor including a cutting unit configured to pre-cut a juice extraction ingredient in a hopper above a screw by rotation, wherein the cutting unit includes a rotating body rotatably supported on a bottom plate of the hopper, a chopping blade disposed on one side of the rotating body, the chopping blade being formed so as to extend upward in a spiral shape, a cutting blade disposed on the other side of the rotating body, the cutting blade being formed on the bottom plate of the hopper so as to horizontally extend, the cutting blade being configured to push the juice extraction ingredient forward in a rotational direction, and a transfer protrusion extending downward from a lower part of the chopping blade, the transfer protrusion being configured to transfer the ingredient in a region between the chopping blade and the bottom plate of the hopper.

The transfer protrusion may have a section gradually decreasing toward a lower end part thereof.

An inclined blade portion may be formed on a front surface of the transfer protrusion in a rotational direction, the inclined blade portion being inclined in a direction opposite the rotational direction.

The chopping blade and the transfer protrusion may be integrally formed.

The transfer protrusion may be disposed in the center of the lower part of the chopping blade in a longitudinal direction.

The chopping blade and the cutting blade may extend from the center of rotation in opposite directions, and the cutting blade may be curved in a direction opposite the direction in which the chopping blade extends in the spiral shape.

The cutting unit may be formed in a double structure in which a core body made of a rigid material is inserted into the rotating body.

The core body may be provided with at least one of a protrusion protruding from a surface of the core body, a recess depressed from the surface of the core body, and a through-hole formed through the core body.

The juice extractor may further include a juice extraction drum coupled to a lower part of the hopper, the juice extraction drum being configured to receive the screw therein, the screw being configured to squeeze the juice extraction ingredient, wherein at least one discharge hole configured to move the juice extraction ingredient crushed in the hopper into the juice extraction drum located thereunder may be formed in a lower end surface of the hopper.

The transfer protrusion may be configured to cut and crush the ingredient in conjunction with the discharge hole.

### [Advantageous Effects]

According to the present invention, there is provided a juice extractor capable of cutting and agitating a juice extraction ingredient in a hopper and providing the same to a juice extraction drum such that a user does not need to pre-cut the juice extraction ingredient, thereby improving convenience of use.

In addition, there is provided a juice extractor in which a transfer protrusion having a canine shape is disposed on a lower part of a chopping blade extending upward in a spiral shape such that the ingredient can be further transferred and crushed in the region between the chopping blade and a bottom plate of the hopper, thereby further improving the cutting performance of a cutting unit.

### [Description of Drawings]

FIGs. 1 and 2 are perspective views of a cutting unit constituting a juice extractor according to an embodiment of the present invention;
FIGs. 3 to 5 are side views of the cutting unit shown in FIG. 1;
FIG. 6 is a sectional view of the cutting unit shown in FIG. 1;
FIG. 7 is a bottom view of the cutting unit shown in FIG. 1;
FIG. 8 is a view showing a core body formed in a cutting unit according to an embodiment of the present invention and the final shape of the cutting unit for comparison to illustrate a dual structure form of the cutting unit;
FIG. 9 is a sectional view showing the dual structure form of FIG. 8;
FIGs. 10 and 11 are exploded perspective views illustrating the coupling relationship between the cutting unit and a hopper of the juice extractor according to the present invention;
FIG. 12 is a sectional view showing the coupling state between the cutting unit and the hopper of the juice extractor according to the present invention;
FIG. 13 is a plan sectional view showing the use state of the juice extractor according to the present invention; and
FIGs. 14 and 15 are sectional views showing the use state of the juice extractor according to the present invention.

### * Description of Reference Numerals *

100: Cutting unit, 110: Rotating body, 111: Angular recess,
112: Screw recess, 120: Chopping blade, 121: Inclined surface,
130: Cutting blade, 140: Transfer protrusion, 141: Inclined blade portion,
150: Core body, 151: Protrusion, 152: Depression,
153: Through-hole, 210: Hopper,
211: Bottom plate, 212: Connection hole, 213: Discharge hole,
220: Bushing portion, 221: Step, 230: Power transmission unit,
231: Coupling portion, 232: Upper protrusion, 233: Screw hole,
234: Shaft hole, 240: Screw, 300: Juice extraction drum,
310: Screw, 311: Upper rotating shaft

### [Best Mode]

Prior to the description, in various embodiments, components having the same configurations will be representatively described using the same reference numerals as a first embodiment, and in other embodiments, configurations different from the first embodiment will be described.

Hereinafter, a juice extractor according to a first embodiment of the present invention will be described in detail with reference to the accompanying drawings.

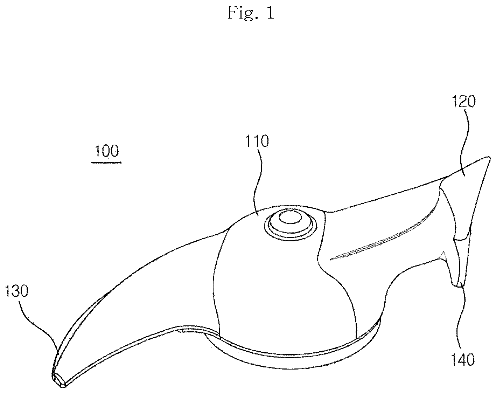

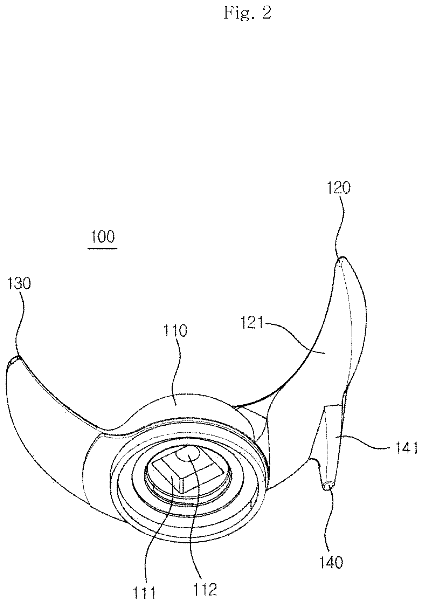

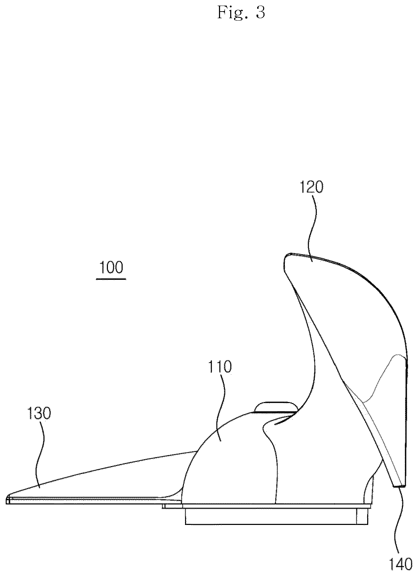

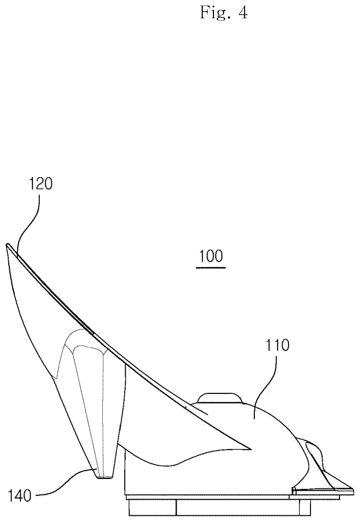

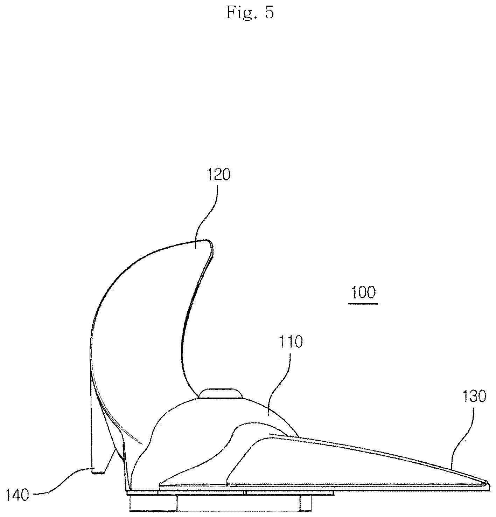

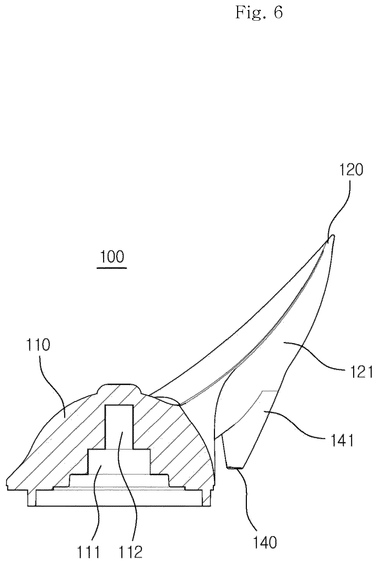

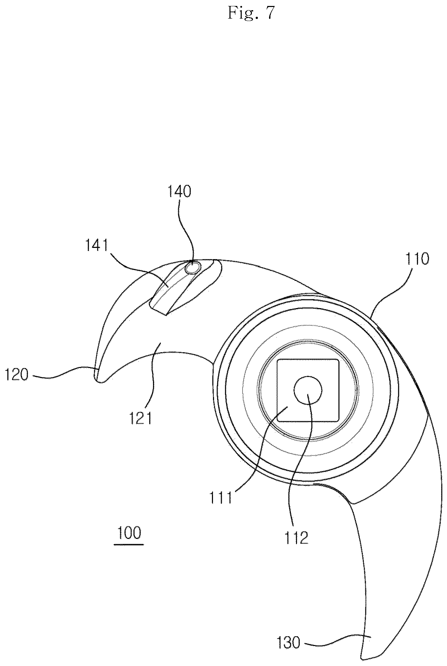

In the accompanying drawings, FIGs. 1 and 2 are perspective views of a cutting unit constituting a juice extractor according to an embodiment of the present invention, FIGs. 3 to 5 are side views of the cutting unit shown in FIG. 1, FIG. 6 is a sectional view of the cutting unit shown in FIG. 1, and FIG. 7 is a bottom view of the cutting unit shown in FIG. 1.

As shown in the figures, the juice extractor according to the present invention includes a cutting unit configured to pre-cut a juice extraction ingredient by rotation in a hopper above a screw, wherein the cutting unit 100 may include a rotating body 110, a chopping blade 120, a cutting blade 130, and a transfer protrusion 140.

The rotating body 110 is disposed above the center of a bottom plate of the hopper, wherein an angular recess 111 configured to receive rotational driving force may be formed in the center of rotation of a lower surface of the rotating body, and a screw recess 112, with which a screw 240 is engaged, is formed above the angular recess 111.

The chopping blade 120 and the cutting blade 130 may extend from the rotating body 110 in opposite directions, respectively, and the transfer protrusion 140 may extend downward from a lower part of the chopping blade 120.

The chopping blade 120 is formed at one side of the rotating body 110 so as to extend upward in the direction of rotation of the cutting unit 100 in a spiral shape. Preferably, an upper end part of the chopping blade 120 is formed in the shape of a pointed hook having a section gradually decreasing toward the end thereof. In addition, the chopping blade 120 is not formed as a plate but is formed so as to have a predetermined thickness, and is formed in the shape of a cow horn because the section of the chopping blade gradually decreases toward the top and the chopping blade extends upward while being curved in a spiral shape.

The chopping blade 120, which faces upward in the shape of a hook, mainly serves to chop and crush the juice extraction ingredient introduced from thereabove. In addition, since the chopping blade 120 is not formed as a plate but is formed so as to have a predetermined thickness, it is possible to prevent stem vegetables, such as water parsley, from being wrapped around the chopping blade 120. In addition, the shape of the chopping blade, which spirally extends in the shape of a cow horn, serves to guide the cut juice extraction ingredient so as to move downward. At this time, an inner surface of the chopping blade 120 in the radial direction is formed as an inclined curved surface 121 that faces radially outward in a downward direction such that the juice extraction ingredient crushed by the chopping blade 120 can be smoothly moved in the downward direction along the curved surface as the chopping blade 120 is rotated.

The higher the height of the upper end of the chopping blade 120, the higher the crushing effect, and it is preferable for the height of the upper end of the chopping blade to be at least greater than the height of an upper end surface of the cutting blade 130. In addition, it is preferable for the length of the chopping blade 120 in the radial direction to be as large as possible within a range within which interference with the inner surface of the hopper does not occur.

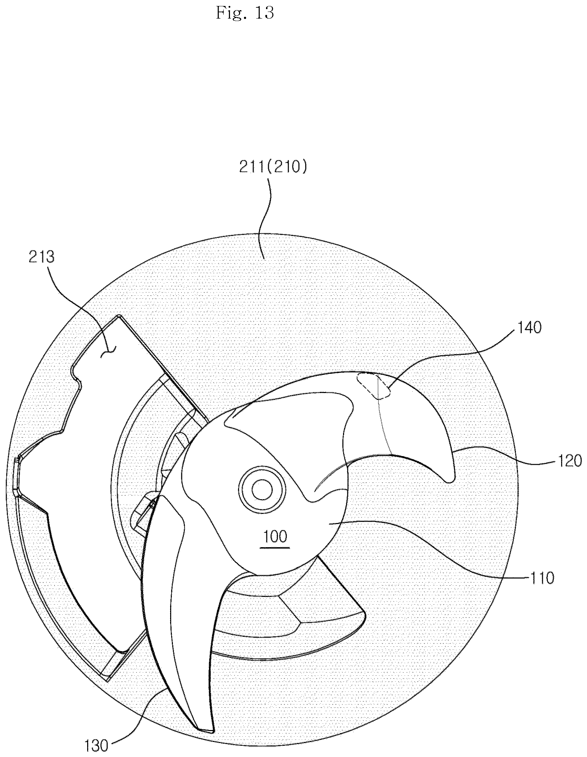

The cutting blade 130 is formed at the bottom plate of the hopper so as to horizontally extend. The cutting blade 130 is preferably formed so as to have a predetermined thickness in the vertical direction as well. A blade may be formed at the upper end where front and rear inclined surfaces of the cutting blade 130 in a rotational direction join each other. In this case, as shown in FIG. 3, the end of the cutting blade 130 may be formed so as to have a height gradually decreasing in the radial direction. The cutting blade 130 serves to secondarily crush the juice extraction ingredient, which has been crushed by the chopping blade 120 and moved downward, using the blade formed at the upper end thereof, and, as the cutting blade 130 is formed so as to have a predetermined thickness, the cutting blade may push the juice extraction ingredient located on the bottom plate 211 of the hopper 210 toward a discharge hole 213 so as to be smoothly discharged through the discharge hole 213, as shown in FIG. 13. This is because, if the thickness of the cutting blade 130 is small, the cutting blade 130 may not push the juice extraction ingredient located on the bottom plate 211 of the hopper 210 and may run idle.

Preferably, but not necessarily, the cutting blade 130 extends from the center of rotation of the cutting unit 100 in the direction 180-degrees opposite the direction in which the chopping blade 120 extends. In this case, the cutting blade 130 is preferably formed in a shape curved in the direction opposite the direction of rotation of the cutting unit 100.

In the present invention, therefore, since the chopping blade 120 and the cutting blade 130 extend from the center of rotation in opposite directions and the chopping blade 120 and the cutting blade 130 are curved to face each other, the overall shape of the cutting unit 100 resembles a crescent moon.

In addition, since the chopping blade 120 and the cutting blade 130 are not located in the same plane and the chopping blade 120 is curved in a spiral shape and extends upward, the cutting unit 100 has a shape that is twisted in space while the overall shape of the cutting unit 100 resembles a crescent moon.

In the same manner as the chopping blade 120, it is preferable for the length of the cutting blade 130 to be as large as possible in the radial direction within a range within which interference with the inner surface of the hopper does not occur.

The transfer protrusion 140 preferably extends downward from the middle of the lower part of the chopping blade 120 in a longitudinal direction and becomes smaller in section toward a lower end part thereof to form a pointed canine shape, and an inclined blade portion 141 inclined downward in the direction opposite the rotational direction is formed at the front thereof in the rotational direction.

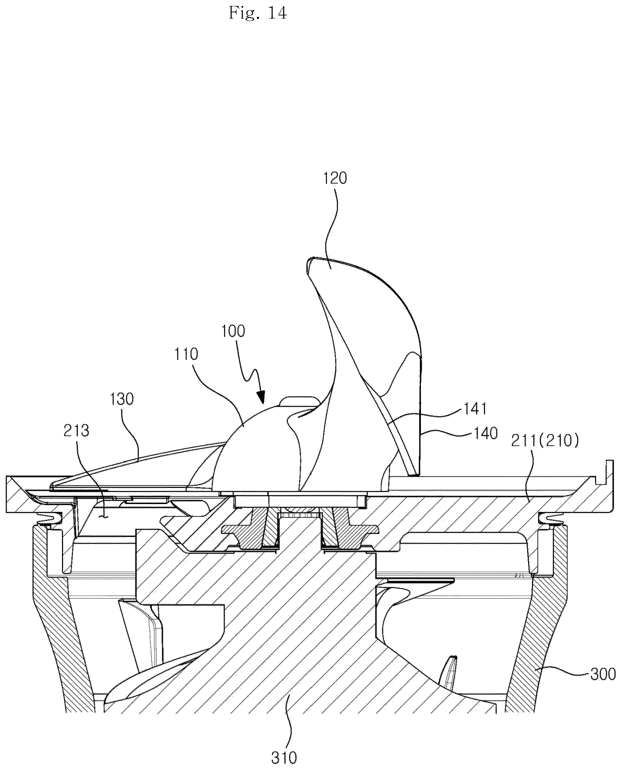

Since the chopping blade 120 is formed so as to extend upward in a spiral shape, a space configured to allow the ingredient to pass therethrough is formed in the region between the chopping blade 120 and the bottom plate 211 of the hopper 210. The transfer protrusion 140, which is formed in the canine shape, is disposed at the middle of the lower part of the chopping blade 120, and mainly serves to transfer the material introduced between the chopping blade 120 and the bottom plate 211 of the hopper 210, as shown in FIG. 14. In addition, as the lower end part of the transfer protrusion 140 is formed in the shape of a pointed canine and the inclined blade 141 inclined downward in the direction opposite the rotational direction is formed at the front thereof in the rotational direction, the transfer protrusion may also serve to crush the material located between the chopping blade 120 and the bottom plate 211 of the hopper 210. To this end, the chopping blade 120 is preferably configured to have a thickness sufficient to cut and crush the material in the rotational direction.

The lower the position of the lower end part of the transfer protrusion 140, the more effectively crushing and transfer are performed, and therefore it is preferable to locate the lower end of the transfer protrusion as close to the bottom plate 211 of the hopper 210 as possible within a range within which interference with the bottom plate 211 of the hopper 210 does not occur.

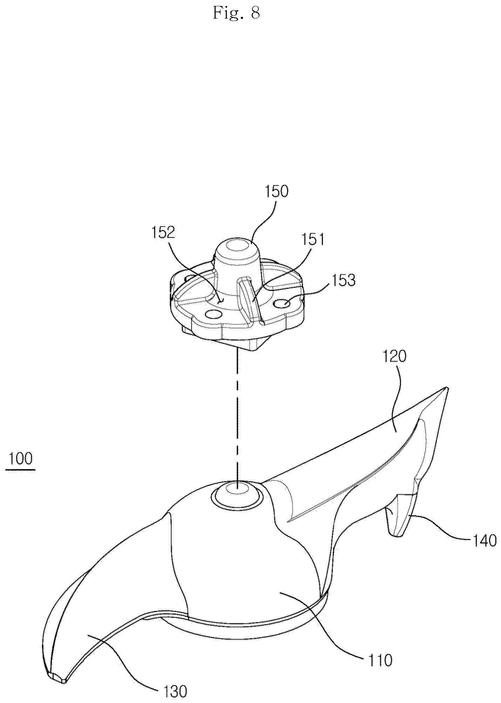

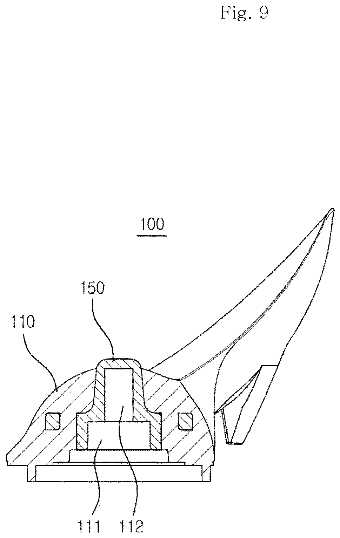

In the accompanying drawings, FIG. 8 is a view showing a core body formed in a cutting unit according to an embodiment of the present invention and the final shape of the cutting unit for comparison to illustrate a dual structure form of the cutting unit, and FIG. 9 is a sectional view showing the dual structure form of FIG. 8.

The cutting unit 100 according to the embodiment of the present invention may be formed in a double structure in which a core body 150 made of a rigid material is inserted into the rotating body 110.

As shown in FIGs. 8 and 9, in the cutting unit 100, a core body 150 made of a material having higher strength than the rotating body 110 forms an internal structure of the rotating body 110.

The cutting unit 100 is required to be made of an eco-friendly, high-strength, easy-to-process, lightweight material that is harmless to the human body. In particular, the angular recess 111 and the screw recess 112 of the rotating body 110, which receives the driving force, are subjected to strong load and may be easily deformed or broken if sufficient strength is not secured.

In the present invention, therefore, the core body 150 made of the strong material is inserted into the rotating body 110 of the cutting unit 100 to secure strength and at the same time to satisfy the manufacturing conditions required for the cutting unit 100.

In this case, the core body 150 may be made of PEI (polyetherimide), and the cutting unit 100 may be made of POM (polyoxymethylene or polyacetal) or ABS (acrylonitrile butadiene styrene).

The core body 150 and the cutting unit 100, which are made of two different materials, may be manufactured so as to be strongly coupled to each other by insert injection molding.

The core body 150 may be sized to be received in the rotating body 110, and the core body 150 may have a protrusion 151 protruding from the surface of the core body 150, a recess 152 depressed from the surface of the core body 150, or a through-hole 153 formed through the core body 150 to increase the force of coupling between the core body 150 and the cutting unit 100.

In addition, the core body 150 made of the strong material may be provided with the angular recess 111 and the screw recess 112, to which strong load is applied, for coupling with a power transmission unit 230 and a screw 240, which will be described later, thereby further improving the rigidity of a coupling region.

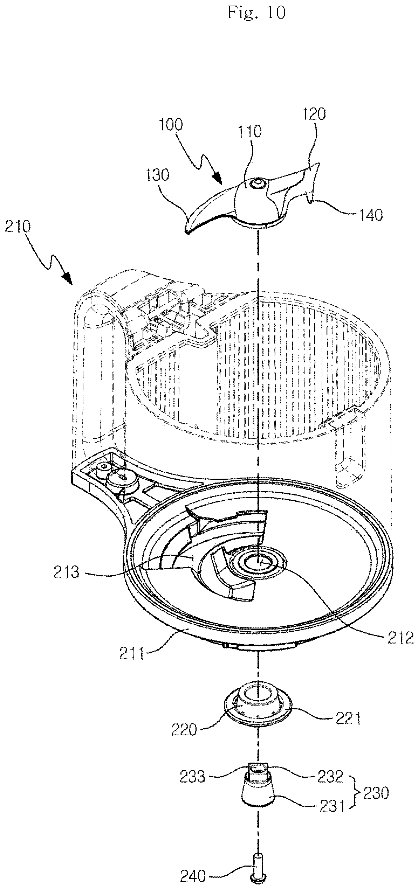

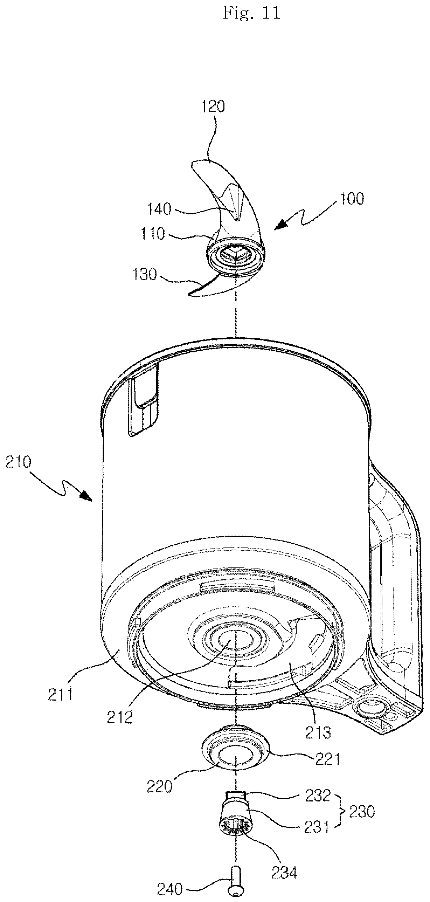

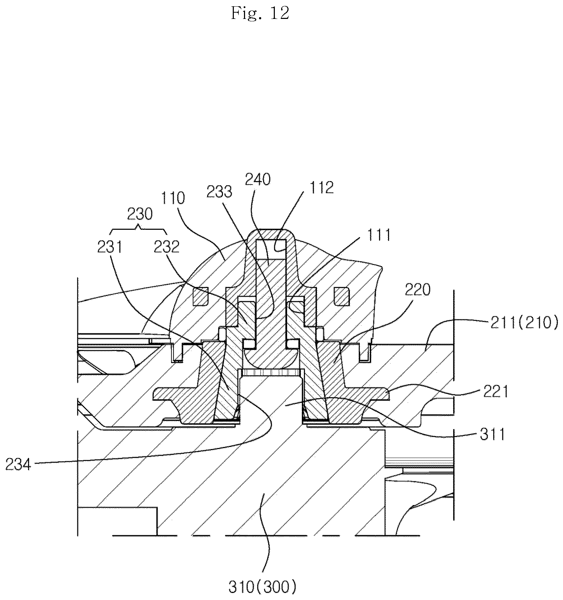

In the accompanying drawings, FIGs. 10 and 11 are exploded perspective views illustrating the coupling relationship between the cutting unit and the hopper of the juice extractor according to the present invention, and FIG. 12 is a sectional view showing the coupling state between the cutting unit and the hopper of the juice extractor according to the present invention.

The rotating body 110 of the cutting unit 100 according to the present embodiment may be rotatably supported in a connection hole 212 formed in the center of the bottom plate 211 of the hopper 210.

The juice extractor may include a driving body configured to provide driving force, a container-shaped juice extraction drum 300 assembled to an upper side of the driving body, a screw 310 disposed in the juice extraction drum 300, the screw being configured to crush and squeeze an ingredient received in the juice extraction drum 300 while being rotated by the driving force received from the driving body, and a hopper 210 assembled to an upper side of the juice extraction drum 300, the hopper being configured to supply an ingredient to the juice extraction drum 300.

The hopper 210, which is cylindrical in shape, forms a space for receiving the juice extraction ingredient through an open upper part, wherein the connection hole 212 may be formed through the center of the bottom plate 211 of the hopper 210, and at least one discharge through-hole 213 may be formed between the center and the edge of the bottom plate 211 of the hopper 210. A juice extraction ingredient introduced into the hopper 210 may be cut and crushed by the cutting unit 100 rotated in the hopper 210 and may be supplied to the juice extraction drum 300 disposed under the hopper 210 through the discharge hole 213.

Since the cutting unit 100 is not rotated in the hopper 210 in the state in which a lower end and an upper end thereof are supported by the hopper 210 but cuts the juice extraction ingredient in the state in which only the lower end thereof is supported by the hopper 210, an open space without interference is formed above the cutting unit 100 in the hopper 210. Therefore, since the entire space above the cutting unit 100 forms an open space, it is possible to introduce and cut a juice extraction ingredient having a large size, such as whole fruits, into the hopper 210.

For example, the cutting unit 100 is disposed on an upper side of a bushing portion 220 disposed in the connection hole 212 of the bottom plate 211 of the hopper 210 and fixed to the power transmission portion 230 disposed on a lower side of the bushing portion 220, whereby the cutting unit may be rotatably supported on the bottom plate 211 of the hopper 210.

The bushing portion 220 is formed in the shape of a cone in which each of inner and outer faces thereof in a radial direction has a radius gradually decreasing in an upward direction, and a lower end of the bushing portion protrudes in the shape of a circular flange to form a step 221. A conical inclined surface and a catching protrusion are formed at the inner surface of the connection hole 212 so as to correspond to the shape of the outer surface of the bushing portion 220. In this case, the bushing portion 220 may be integrally formed on the bottom plate 211 of the hopper 210 by insert injection molding.

The connection hole 212 and the bushing portion 220 may abut in a conical shape with a radius gradually decreasing in the upward direction such that the force of coupling between the bottom plate 211 of the hopper 210 and the bushing portion 220 can be firmly maintained even when the screw 310 is subjected to upward force when the screw is raised by the load during the juice extraction process, thereby preventing deformation due to upward movement of the screw 310.

The bushing portion 220 is provided at an inside thereof with a vertically open hole, into which the power transmission unit 230 is inserted. When the screw 310 is rotated in the state in which an upper rotating shaft 311 of the screw 310 is inserted into the power transmission unit 230, the power transmission unit 230, which is inserted into the inside of the bushing portion 220, is rotated in the bushing portion 220, and therefore it is preferable for the bushing portion 220 to be made of a material that is not easily deformed by the friction generated when the power transmission unit 230 is rotated.

The power transmission unit 230 may include a coupling portion 231 formed in a conical shape so that an outer surface thereof corresponds to the inner surface of the bushing portion 220 and an upper protrusion 232 formed on an upper end of the coupling portion 231 so as to protrude above the upper surface of the bushing portion 220, the upper protrusion having a screw hole 233, into which the screw 240 is inserted. An angular shaft hole 234, into which the upper rotating shaft 311 of the screw 310, which is an angular shaft, is inserted, is formed in a lower surface of the coupling portion 231.

When the power transmission unit 230 is inserted into the bushing portion 220 from the lower surface of the hopper 210, the upper protrusion 232 formed above the coupling portion 231 extends through the hole in the bushing portion 220, protrudes above the upper surface of the bushing portion 220, and is positioned in the hopper 210. In this case, the upper protrusion 232 is formed in a quadrangular shape, and the angular recess 111 is formed in the lower surface of the rotating body 110 so as to correspond thereto, whereby the cutting unit 100 may be coupled to the upper protrusion 232. The shape of the upper protrusion 232 and the shape of the recess 111 in the lower surface of the rotating body 110 corresponding thereto are not limited thereto, and may be changed into various shapes, such as a cross shape and a spline shape.

In the state in which the upper protrusion 232 and the recess 111 in the lower surface of the rotating body 110 are coupled to each other, the screw 240 may be inserted through the shaft hole 234 of the coupling portion 231 such that the screw is coupled to the screw hole 233 formed through the upper protrusion 232 and the screw recess 112 formed in the center of rotation of the lower surface of the cutting unit 100, thereby firmly fixing the rotating body 110 of the cutting unit 100 to the upper protrusion 232.

A step configured to limit the insertion depth of the upper rotating shaft 311 of the screw 310 is formed at the upper end of the shaft hole 234 formed in the inner surface of the coupling portion 231, and the head of the screw 240 is located above the step.

As described above, the cutting unit 100 rotatably supported on the bottom plate 211 of the hopper 210 is rotated along with the screw 310 by driving force received from the screw 310 as the upper rotating shaft 311 of the screw 310 disposed in the juice extraction drum 300 is coupled to the shaft hole 234 of the power transmission unit 230 in the process in which the hopper 210 is coupled to the upper part of the juice extraction drum 300.

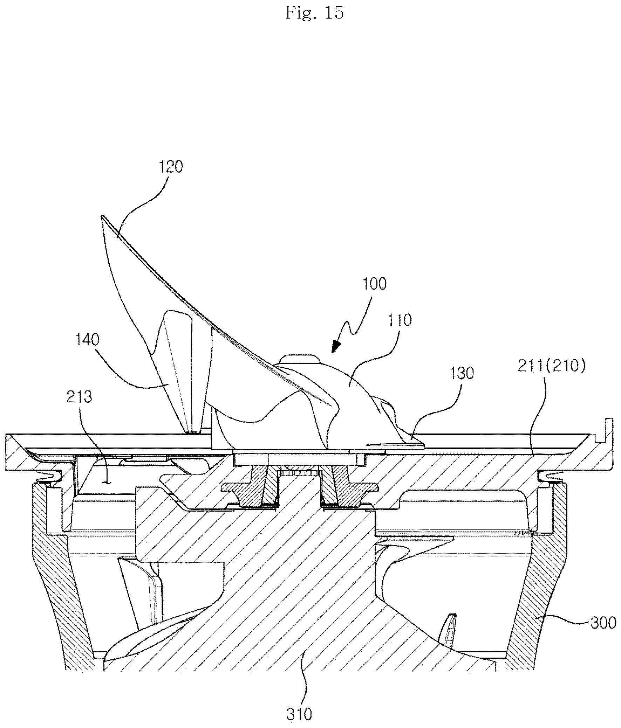

In the accompanying drawings, FIG. 13 is a plan sectional view showing the use state of the juice extractor according to the present invention, and FIGs. 14 and 15 are sectional views showing the use state of the juice extractor according to the present invention.

A process of pre-crushing and cutting of an ingredient by the cutting unit 100 of the juice extractor according to the present invention will be described with reference to FIGs. 13 to 15.

The cutting unit 100, which is rotatably coupled to the bottom plate 211 on the inner side of the hopper 210, is rotated in the hopper 210 by rotational force received from the screw 310 located in the juice extraction drum 300, cuts and crushes a juice extraction ingredient introduced into the hopper 210, and supplies the same into the juice extraction drum 300 located under the hopper 210 through the discharge hole 213 formed in the bottom plate 211 of the hopper 210.

In the present invention, since the cutting unit 100 is not rotated in the hopper 210 in the state in which the lower end and the upper end thereof are supported by the hopper 210 but cuts the juice extraction ingredient in the state in which only the lower end thereof is supported by the hopper 210, an open space without interference is formed above the cutting unit 100 in the hopper 210. Therefore, since the entire space above the cutting unit 100 forms an open space, it is possible to introduce and cut a juice extraction ingredient having a large size, such as whole fruits, into the hopper 210.

Here, the chopping blade 120 formed on one side of the rotating body 110 extends upward in the form of a hook, and mainly serves to chop and crush the juice extraction ingredient introduced from above. In addition, a spiral shape extending in the shape of a cow horn serves to guide the cut juice extraction ingredient to move downward. At this time, since the inclined curved surface 121 is formed such that that the inner surface of the chopping blade 120 in the radial direction faces gradually outward in the radial direction toward a lower part thereof, the juice extraction ingredient crushed by the chopping blade 120 as the chopping blade 120 is rotated may be smoothly moved in a downward direction along the curved surface.

The cutting blade 130 formed on the other side of the rotating body 110, i.e., on the side opposite the side on which the chopping blade 120 is formed, serves to secondarily crush the juice extraction ingredient that has been crushed by the chopping blade 120 and moved downward, and at the same time, moves the juice extraction ingredient located on the bottom plate 211 of the hopper 210 toward the discharge hole 213 such that the juice extraction ingredient can be discharged smoothly through the discharge hole 213, and serves to cut the material in conjunction with the discharge hole 213.

That is, the chopping blade 120 chops and crushes the juice extraction ingredient introduced through the upper opening of the hopper 210, and the cutting blade 130 transfers the ingredient primarily crushed by the chopping blade 120 to the discharge hole 213 and at the same time secondarily cuts the ingredient through interaction with the discharge hole 213 such that the ingredient can be discharged through the discharge hole 213.

However, since the chopping blade 120 is formed in a shape that is curved upward from one side of the rotating body 110, a space is formed between the chopping blade 120 and the bottom plate 211 of the hopper 210, and the ingredient cutting and crushing operation is not performed in the space under the chopping blade 120.

In addition, since the chopping blade 120 passes through the ingredient cut by the cutting blade 130 and placed on the bottom plate 211 of the hopper 210 without transferring the same, the ingredient through which the chopping blade 120 has passed is not transferred toward the discharge hole 213 until the next rotation cycle of the cutting blade 130.

In the present embodiment, the transfer protrusion 140 disposed at the lower part of the chopping blade 120 may transfer the ingredient disposed in the region between the chopping blade 120 and the bottom plate 211 of the hopper 210, thereby shortening the transfer cycle of the juice extraction ingredient. That is, in addition to transfer of the ingredient on the bottom plate 211 of the hopper 210 to the discharge hole 213 using the cutting blade 130, the ingredient is transferred using the transfer protrusion 140 provided at the lower part of the chopping blade 120 located opposite the cutting blade 130, whereby the transfer cycle of the ingredient may be shortened, and therefore it is possible to more quickly discharge the pre-cut and crushed ingredient through the discharge hole 213 than when transferring the ingredient using the cutting blade 130 alone.

In addition, since the inclined blade portion 141 inclined downward in the direction opposite the rotational direction is formed at the front of the transfer protrusion 140 disposed at the lower part of the chopping blade 120 in the rotational direction, the ingredient transferred to the discharge hole 213 by the transfer protrusion 140 may be cut by interaction with the discharge hole 213, thereby further improving the pre-cutting efficiency of the ingredient. To this end, it is preferable for the inclined blade portion 141 formed at the front of the transfer protrusion 140 in the rotational direction to cut and crush the ingredient in conjunction with the discharge hole 213 formed in the bottom plate 211 of the hopper 210.

As described above, the cutting unit 100 according to the present embodiment cuts and crushes the ingredient supplied into the hopper 210 using the chopping blade 120 and further cuts and crushes the ingredient by interaction with the discharge hole 213 while transferring the ingredient located on the bottom plate 211 of the hopper 210 toward the discharge hole 213 using the cutting blade 130, and in addition, transfers the ingredient toward the discharge hole 213 using the transfer protrusion 140 provided at the lower part of the chopping blade 120 located opposite the center of rotation of the cutting blade 130, thereby shortening the discharge cycle of the juice extraction ingredient, and cuts and crushes the juice extraction ingredient using the inclined blade portion 141 of the transfer protrusion 140 under the chopping blade 120, thereby further improving the cutting and crushing efficiency of the cutting unit 100.

The scope of the present invention is not limited to the embodiment described above, but may be implemented by various embodiments within the scope of the appended claims. The various modifications that can be made by a person having ordinary skill in the art to which the invention pertains, without departing from the gist of the invention as claimed, are deemed to be within the scope of the claims.

## Claims

1. A juice extractor comprising a cutting unit configured to pre-cut a juice extraction ingredient in a hopper above a screw by rotation, wherein the cutting unit comprises:
a rotating body rotatably supported on a bottom plate of the hopper;
a chopping blade disposed on one side of the rotating body, the chopping blade being formed so as to extend upward in a spiral shape;
a cutting blade disposed on the other side of the rotating body, the cutting blade being formed on the bottom plate of the hopper so as to horizontally extend, the cutting blade being configured to push the juice extraction ingredient forward in a rotational direction; and
a transfer protrusion extending downward from a lower part of the chopping blade, the transfer protrusion being configured to transfer the ingredient in a region between the chopping blade and the bottom plate of the hopper.

2. The juice extractor according to claim 1, wherein the transfer protrusion has a section gradually decreasing toward a lower end part thereof.

3. The juice extractor according to claim 2, wherein an inclined blade portion is formed on a front surface of the transfer protrusion in a rotational direction, the inclined blade portion being inclined in a direction opposite the rotational direction.

4. The juice extractor according to claim 2, wherein the chopping blade and the transfer protrusion are integrally formed.

5. The juice extractor according to claim 2, wherein the transfer protrusion is disposed in a center of the lower part of the chopping blade in a longitudinal direction.

6. The juice extractor according to claim 2, wherein the chopping blade and the cutting blade extend from a center of rotation in opposite directions, and the cutting blade is curved in a direction opposite the direction in which the chopping blade extends in the spiral shape.

7. The juice extractor according to claim 1, wherein the cutting unit is formed in a double structure in which a core body made of a rigid material is inserted into the rotating body.

8. The juice extractor according to claim 7, wherein the core body is provided with at least one of a protrusion protruding from a surface of the core body, a recess depressed from the surface of the core body, and a through-hole formed through the core body.

9. The juice extractor according to claim 1, further comprising:
a juice extraction drum coupled to a lower part of the hopper, the juice extraction drum being configured to receive the screw therein, the screw being configured to squeeze the juice extraction ingredient, wherein
at least one discharge hole configured to move the juice extraction ingredient crushed in the hopper into the juice extraction drum located thereunder is formed in a lower end surface of the hopper.

10. The juice extractor according to claim 9, wherein the transfer protrusion is configured to cut and crush the ingredient in conjunction with the discharge hole.
